# EUROPEAN PATENT SPECIFICATION

(11) **EP 2 528 131 B1**
(45) Date of publication and mention of the grant of the patent: **22.06.2016**
(21) Application number: 12168814.7
(22) Date of filing: 22.05.2012
(51) Int. Cl.: H01M 2/02

(54) **Electric storage device and insulation cover**
Elektrische Speichervorrichtung und Isolationsabdeckung
Dispositif de stockage électrique et couvercle d'isolation

(30) Priority: 27.05.2011 JP 2011119602
(43) Date of publication of application: 28.11.2012
(73) Proprietor: GS Yuasa International Ltd., Kisshoin, Minami-ku, Kyoto-shi, Kyoto 601-8520 (JP)
(72) Inventor: Yoshitake, Shinsuke, Kyoto-shi, Kyoto 601-8520 (JP); Kishimoto, Tomonori, Kyoto-shi, Kyoto 601-8520 (JP); Nukuda, Toshiyuki, Kyoto-shi, Kyoto 601-8520 (JP)
(74) Representative: Vossius & Partner Patentanwälte Rechtsanwälte mbB

(56) References cited:
- US-A1- 2011 052 975

## Description

### CROSS-REFERENCE TO RELATED APPLICATION

This application claims priority from Japanese Patent Application No. 2011-119602 filed with the Japan Patent Office on May 27, 2011. (JP 2012-248427 A).

### BACKGROUND

### 1. Technical Field

An embodiment of the disclosure relates to an electric storage device and an insulation cover.

### 2. Related Art

An electric storage device can be used as, for example, a non-aqueous electrolytic secondary battery such as a lithium-ion secondary battery. The electric storage device includes an electrode assembly and current collectors provided on both sides of the electrode assembly for example. As the electric storage device of this kind, a non-aqueous electrolytic secondary battery described in JP-A-10-106536 is known. The electrode assembly disclosed in Fig. 4 of this publication includes a spirally wound zonal positive electrode (5) and a spirally wound zonal negative electrode (6). A pair of separators (7) for securing insulation is disposed between the positive electrode (5) and the negative electrodes (6). As illustrated in Fig. 8 of this publication, this electrode assembly is crushed so that the electrode assembly as viewed from an axial direction (vertical direction) of the spiral shape becomes a rounded rectangular shape. As illustrated in Fig. 9 of this publication, a non-applied portion (4) of each of the electrodes is divided into five lamination bunches (end edges of the electrode). A current collector (10) of this battery is a metal member having a plurality of grooves for receiving the lamination bunches. Each of the lamination bunches and the current collector (10) is welded to each other by laser welding.

As described in JP-A-2010-272324, there is also developed a non-aqueous electrolytic secondary battery including an electrode assembly having a laterally oriented spiral center and positive and negative current collectors disposed on left and right ends of the electrode assembly. Each of the current collectors of this battery has a bifurcated shape whose tip end branches off. In this publication, however, an arrangement of the electrode assembly is merely shown by a phantom line. This publication does not disclose, at all, a structure for electrically bonding the current collectors and a large number of laterally projecting positive and negative electrode sheets to each other with each other (i.e., bonding structure between the electrode sheets and the current collectors).

US 2011/0052975 A discloses a secondary battery in which an electrode assembly is insulated by an insulating member that is disposed between a case and the electrode assembly. The insulating member has a base and four insulating plates extending from the base. The positive terminal and the negative terminal have lead tabs, respectively. Two opposite insulating plates among the four insulating plates are spaced away from the lead tabs.

### SUMMARY

An electric storage device includes: an electrode assembly including a positive electrode sheet, a negative electrode sheet, and a separator for insulating between the positive electrode sheet and the negative electrode sheet; positive and negative current collectors disposed on both ends of the electrode assembly; a case in which the electrode assembly and the current collectors are housed; and a support member extending from the positive current collector to the negative current collector.

According to this electric storage device, it is possible to restrain the current collectors from being displaced toward the electrode assembly by disposing a support member between the current collectors. Therefore, even when vibration is applied to the electric storage device, since it is possible to restrain the current collectors from being displaced, deformation or damage of the electric storage device caused by the displacement can be restrained.

### BRIEF DESCRIPTION OF DRAWINGS

Fig. 1 is a perspective view illustrating one of support members and an insulation cover according to a first example;
Fig. 2 is a partially cut-away front view illustrating a non-aqueous electrolytic secondary battery;
Fig. 3 is a partially cut-away side view illustrating a structure of the non-aqueous electrolytic secondary battery;
Fig. 4 is a partially cut-away enlarged front view illustrating structures of peripheries of a current collector and a support member;
Fig. 5 is a perspective view illustrating essential portions of the non-aqueous electrolytic secondary battery illustrated in Fig. 2;
Fig. 6 is a perspective view illustrating a structure of an electrode assembly;
Fig. 7 is a transverse sectional view illustrating essential portions illustrating a mounted state of the support member illustrated in Fig. 1;
Fig. 8 is a vertical sectional view of essential portions illustrating the mounted state of the support member illustrated in Fig. 1;
Fig. 9 is a development view of an integral insulation cover that is integrally formed with a pair of support members according to a second example;
Fig. 10 is a perspective view illustrating an assembling manner of the integral insulation cover illustrated in Fig. 9;
Fig. 11 is a partially cut-away front view of a bottom end of a battery illustrating a mounting structure of the integral insulation cover;
Fig. 12 is a transverse sectional view of essential portions of the battery illustrating the mounting structure of the integral insulation cover; and
Fig. 13 is a vertical sectional view of the essential portions of the battery illustrating the mounting structure of the integral insulation cover.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically illustrated in order to simplify the drawing.

In recent years, the batteries described in the above publications are frequently provided in running vehicles such as automobiles. In this case, if an electrode assembly and a current collector are merely bonded to each other by laser welding as in JP-A-10-106536, the current collector and an electrode sheet are easily vibrated. Therefore, if the vibration continues, it is estimated that damage such as a crack is prone to generate in the bonded portion at an early stage. Hence, there is an urgent need to develop an electric storage device having an excellent vibration resistance.

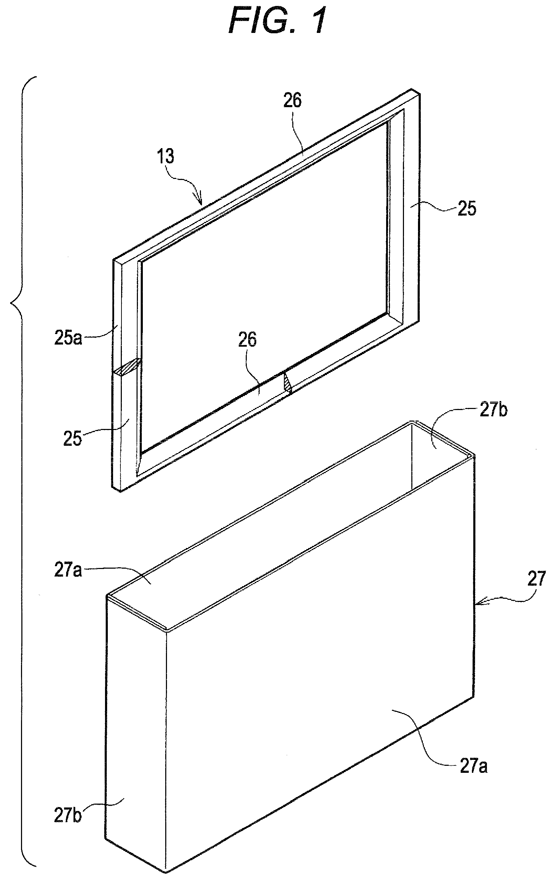

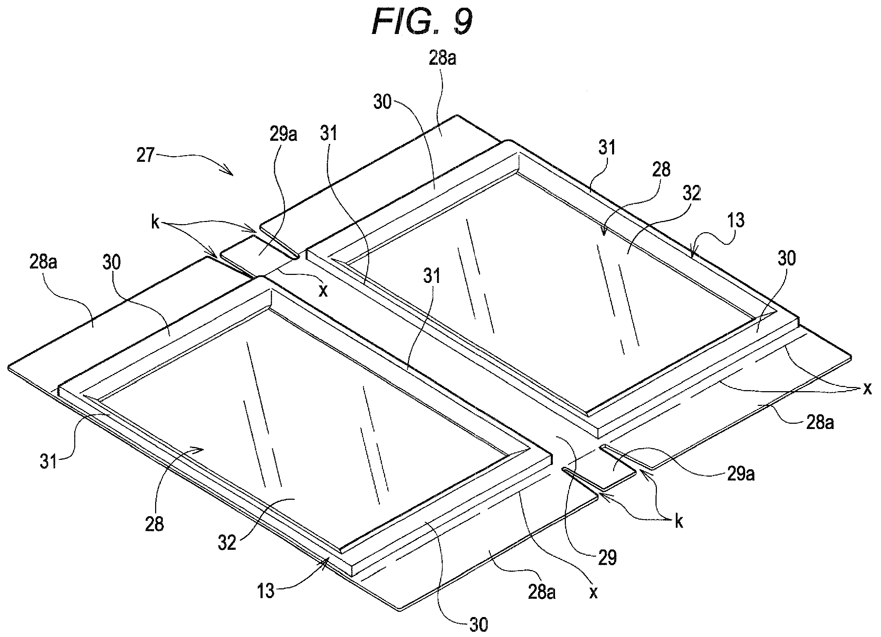

An electric storage device according to the present embodiment will be described with reference to the drawings. In the embodiment, examples of a non-aqueous electrolytic secondary battery (lithium-ion secondary battery) that is an example of the electric storage device will be described. Figs. 1 to 8 show a first example and Figs. 9 to 13 show a second example.

### [First Example]

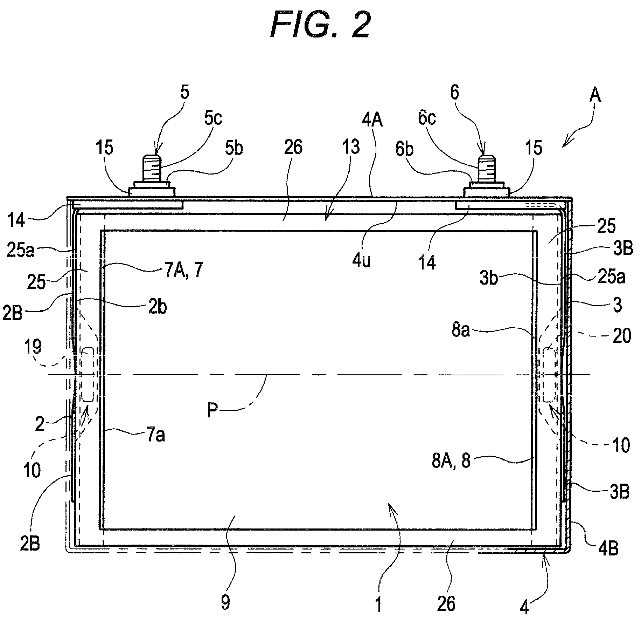

As illustrated in Figs. 2 to 5, a non-aqueous electrolytic secondary battery (lithium-ion secondary battery) A according to the first example includes an electrode assembly 1, a pair of current collectors 2 and 3, electrolytic solution (not shown), and a battery case 4 for accommodating the above-described elements.

The battery case 4 is formed from a hard plate made of aluminum alloy or stainless alloy. The battery case 4 has a substantially rectangular parallelepiped shape (angular shape; box-shape) that is thin in one direction.

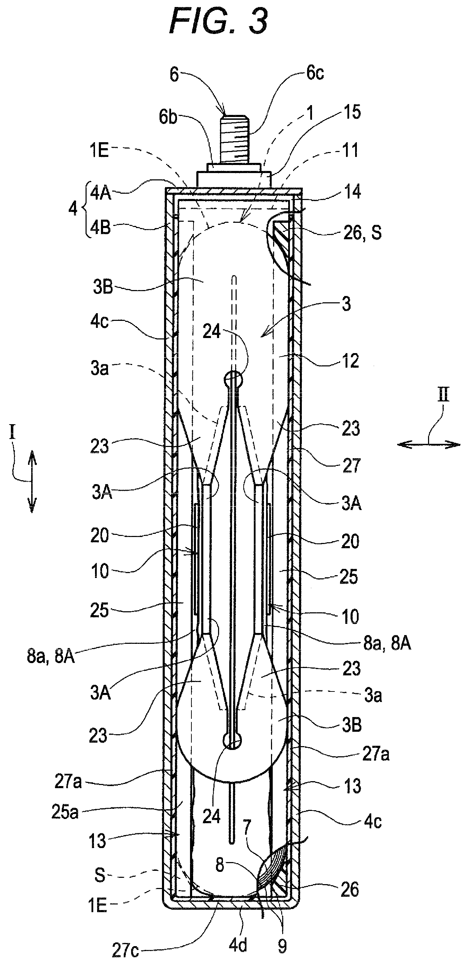

As illustrated in Figs. 2 and 3, the battery case 4 includes a non-lid box-shaped body case 4B and a top panel 4A. The case 4B and the top panel 4A can integrally be formed together by laser welding.

The top panel 4A of the battery case 4 is provided with a positive electrode 5 and a negative electrode 6. The positive electrode 5 is electrically connected to the current collector 2, and the negative electrode 6 is electrically connected to the current collector 3. That is, the top panel 4A functions as an electrode terminal-support wall 4a that supports the positive and negative electrodes 5 and 6.

The body case 4B includes left and right current collecting-opposed walls 4b, front and rear main case walls 4c, and a bottom wall 4d. That is, the body case 4B has a rectangular container shape including these five walls.

As illustrated in Figs. 1, 2 and 3, the secondary battery A further includes an insulation cover 27 made of insulating material. The insulation cover 27 is disposed between the electrode assembly 1 and the pair of current collectors 2 and 3 on one side and the battery case 4 on the other side in a state where the electrode assembly 1 and the current collectors 2 and 3 are housed in the insulation cover 27.

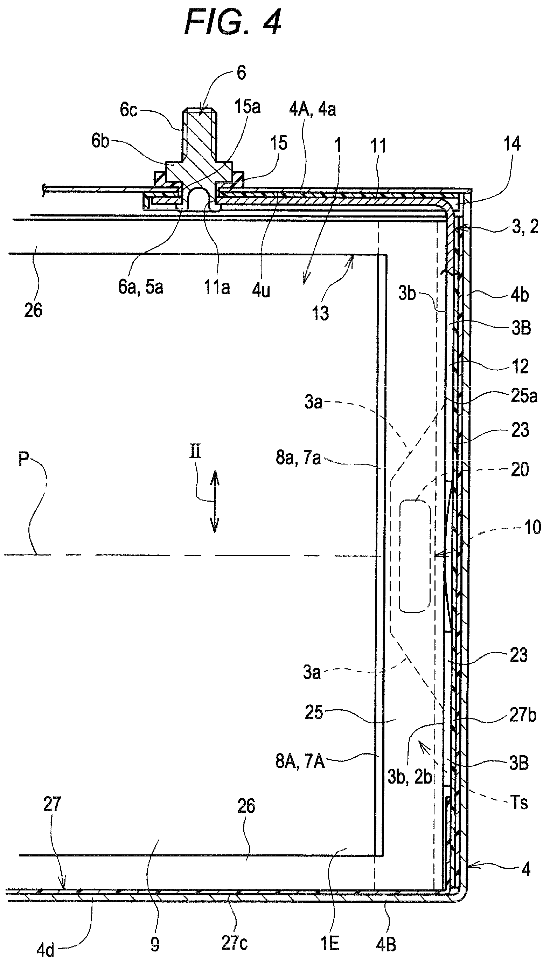

As illustrated in Fig. 1, the insulation cover 27 has such a non-lid shape that the insulation cover 27 is housed in the body case 4B without or almost without space. As illustrated in Figs. 1, 4, 7 and 8, the insulation cover 27 includes front and rear large side walls 27a, left and right small side walls 27b, and a bottom wall 27c. The insulation cover 27 is made of thin film-like synthetic resin for example. The insulation cover 27 has such a structure (assembling-type structure) that the insulation cover 27 is assembled into the non-lid shape (rectangular parallelepiped shape) as illustrated in Fig. 1 by folding the walls 27a to 27c from a developed state (developed insulation cover is illustrated in Fig. 9). As illustrated in Fig. 4, each of the small side walls 27b has a two-ply structure at left and right ends of the insulation cover 27. Projecting pieces having small areas (portions corresponding to projecting pieces 29a illustrated in Fig. 9 but having no reference numeral) projecting from left and right ends of the bottom wall 27c are superposed on the two small side walls 27b at lower ends of the left and right ends of the insulation cover 27. That is, each of the lower ends has a three-ply structure. The insulation cover 27 may be formed by molding, or the insulation cover 27 may have another structure.

As illustrated in Figs. 2, 5 and 6, the electrode assembly 1 includes a positive electrode sheet 7, a negative electrode sheet 8, and two separators 9 that are insulating materials provided between the electrode sheets 7 and 8. That is, the electrode assembly 1 is of a four-ply laminated structure. According to the electrode assembly 1, the electrode sheets 7 and 8 and the two separators 9 are spirally wound. The electrode assembly 1 is formed into such a roll body that the electrode assembly 1 is of a rounded rectangular shape as viewed from an axial direction (direction P) of this spiral shape. Hence, the electrode assembly 1 has a substantially rectangular parallelepiped shape including arc portions (curved surfaces) extending in the direction P. That is, as illustrated in Fig. 3, the electrode assembly I is formed thin in a longitudinal direction (direction of arrow I) that is substantially perpendicular to the direction P, and is formed thick in a vertical direction (direction of arrow II) that is substantially perpendicular to both the direction P and the longitudinal direction. That is, the electrode assembly 1 has a flat rounded rectangular parallelepiped shape.

The positive electrode sheet 7 is a zonal aluminum foil to which positive electrode active material is applied. The negative electrode sheet 8 is a zonal copper foil to which negative electrode active material is applied. The positive electrode sheet 7 and the negative electrode sheet 8 are deviated from each other in the direction P.

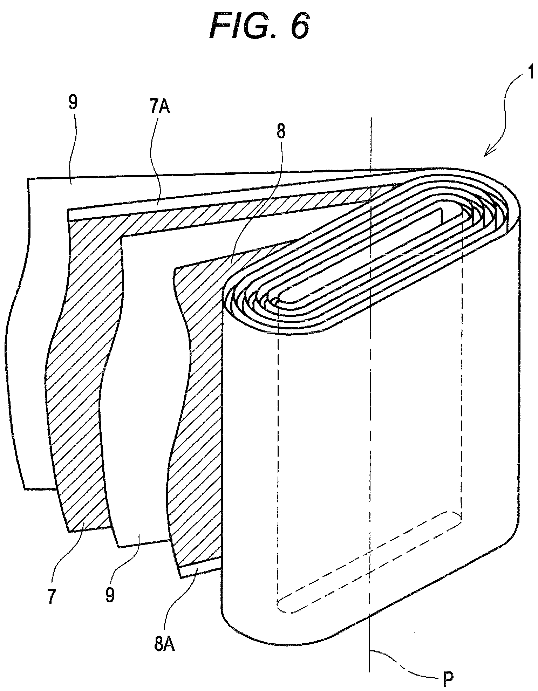

An end 7A of the positive electrode sheet 7 and an end 8A of the negative electrode sheet 8 are located on opposite sides in the direction P. The ends 7A and 8A are bare portions of the aluminum or copper foil, where any active material is not applied to the bare portions. The ends 7A and 8A include straight portions 7a and 8a (vertically oriented in Figs. 3 to 5). A large number of straight portions 7a and 8a are laminated on one another in a radial direction of the spiral shape. The large number of straight portions 7a and 8a are respectively electrically bonded to a counter electrode plate-shaped portion 2A of the current collector 2 or the counter electrode plate-shaped portion 3A of the current collector 3 in a state where the straight portions 7a and 8a are bundled and laminated on one another. In Fig. 6, distances between the electrode sheets 7 and 8 and the separators 9 are exaggerated.

As the positive electrode active material, it is possible to use a known material that occludes and discharges lithium ion. As the positive electrode active material, it is possible to use a lithium-containing transition metal oxide having α-NaFeO₂ structure for example. This metal oxide is LiCoO₂, or LiCoO₂ in which partial Co is substituted by Ni, Mn, other transition metal or boron for example. As the positive electrode active material, it is possible to use a compound having a Spinel crystal structure such as LiMn₂O₄, or polyanion type compound. The polyanion type compound is LiFePO₄ or LiFeSO₄; or LiFePO₄ or LiFeSO₄ in which partial Fe is substituted by Co or Mn for example.

The current collectors 2 and 3, as well as the positive and negative electrode sheets 7 and 8 have similar structures. Therefore, to avoid redundant description, only one of the collectors and foils (on the side of the negative electrode) will be described basically. Corresponding reference numerals are allocated to the other collector and foil (on the side of the positive electrode) in the drawings.

The current collectors 2 and 3 will be described. The positive electrode current collector 2 made of aluminum or aluminum alloy and the negative electrode current collector 3 made of copper or copper alloy have the identical structures. This structure will be described based on the current collector 3. As illustrated in Figs. 2 to 5, the current collector 3 includes a horizontal upper portion 11 and a vertical current collecting portion 12. The horizontal upper portion 11 is locked (fixed) to the top panel 4A of the battery case 4. The vertical current collecting portion 12 is a portion of the current collector 3 that is folded and suspended from an end of the top panel 4A. Therefore, the current collector 3 has a substantially L-shape as viewed from front.

A surface of the horizontal upper portion 11 of the current collector 3 is abutted against a lower surface 4u of the top panel 4A through a first insulating member 14 made of synthetic resin. A cross section of the first insulating member 14 has angular U-shape whose opening is directed downward. The horizontal upper portion 11 is electrically connected to the electrode terminal 6 through a hole 11a formed in an inner end of the horizontal upper portion 11.

The vertical current collecting portion 12 is electrically connected to the negative electrode sheet 8 of the electrode assembly 1 through a pair of counter electrode plate-shaped portions 3A that are formed in parallel to each other at intermediate portions of the vertical current collecting portion 12 in its vertical direction. A pair of plate-shaped opposed portions 3B are formed on both a base end side (upper side) of the current collector and a tip end side (lower side) of the current collector of the counter electrode plate-shaped portion 3A (one example of at least one of the base end side and the tip end side of the current collector). Each of the plate-shaped opposed portions 3B has a surface that is substantially perpendicular to the counter electrode plate-shaped portion 3A.

Each of the pair of counter electrode plate-shaped portions 3A is a plate-shaped member that projects inward (spiral axial direction P) from the vertical current collecting portion 12 substantially perpendicularly to the vertical current collecting portion 12. These electrode plate-shaped portions 3A are disposed at a predetermined distance from each other in a thickness direction of the electrode assembly 1 (direction of arrow I). Reinforcing plates 3a that are folded at appropriate angles are formed on both sides (upper and lower sides) of the counter electrode plate-shaped portion 3A. Triangular plate-shaped portions 23 that are integrally provided with the reinforcing plates 3a are provided on both sides of the counter electrode plate-shaped portion 3A. The triangular plate-shaped portions 23 of both the counter electrode plate-shaped portions 3A have such shapes that the triangular plate-shaped portions 23 are arranged side-by-side in the longitudinal direction (direction of arrow I) via holes 24.

The positive electrode 5 is made of aluminum for example. The negative electrode 6 is made of copper for example. These terminals have the identical general structures. Therefore, one of them (electrode terminal 6) will be described here. As illustrated in Figs. 2 to 5 (especially Fig. 4), the electrode terminal 6 has a rivet/bolt structure. That is, the electrode terminal 6 includes an upper male thread 6c, a square body 6b located at an intermediate position in the vertical direction, and a cylindrical lower portion 6a.

The male thread 6c stands on an upper side of the square body 6b so that the male thread 6c is electrically connected to a lead wire (not shown). The square body 6b is fitted into a second insulating member 15 made of synthetic resin on an upper side of the top panel 4A that is the electrode terminal-support wall 4a.

A small cylindrical portion 15a of the second insulating member 15 is inserted into a round hole (no reference numeric) of the top panel 4A and a round hole (no reference numeric) of the first insulating member 14. The cylindrical lower portion 6a of the electrode terminal 6 is inserted into the small cylindrical portion 15a and a round hole 11 a of the horizontal upper portion 11 from above. A lower end of the cylindrical lower portion 6a is crushed (swaged) against a lower surface of the horizontal upper portion 11. According to this configuration, the cylindrical lower portion 6a is electrically connected to the horizontal upper portion 11 of the current collector 3.

The cylindrical lower portion 6a and the horizontal upper portion 11 are electrically connected to each other through the first insulating member 14 and the second insulating member 15. According to this configuration, the electrode terminal 6 is mounted on the top panel 4A in a state where the electrode terminal 6 is insulated from the top panel 4A.

Bonded portions 10 (current collecting structure) of mainly the current collector 3 will be described briefly. As illustrated in Figs. 2 to 4 and 7, each of the bonded portions 10 is a portion of the counter electrode plate-shaped portion 3A of the current collector 3, and the bonded portion 10 is ultrasonic welded to many (one example of plurality) of ends 8A of the electrode sheet 8. Plate-shaped metal clips 20 are disposed in the vicinity of the bonded portions 10 of the counter electrode plate-shaped portions 3A. The large number of laminated ends 8A (i.e., a group of electrode sheets 8A) are sandwiched between the clip 20 and the bonded portion 10 of the counter electrode plate-shaped portion 3A, and are ultrasonic welded to the bonded portion 10. Clips 19 that are similar to the clips 20 are also provided on the bonded portions 10 of the current collector 2 on the side of the positive electrode. For example, the clips 19 may be made of aluminum and the clips 20 may be made of copper.

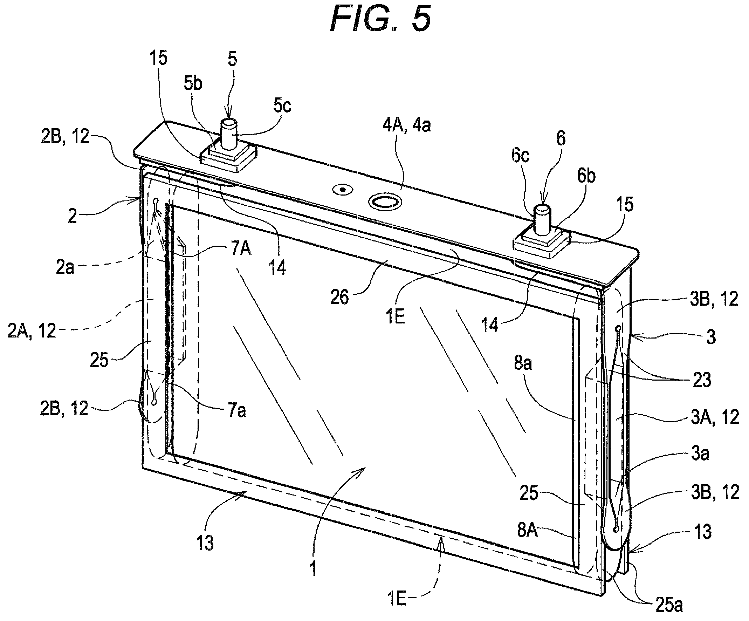

Next, support members 13 will be described. As illustrated in Fig. 5, the secondary battery A of the first example includes the support members 13. The support members 13 restrain the pair of current collectors 2 and 3 from swinging in the lateral direction (direction P). For this purpose, the support members 13 are disposed outside the electrode assembly 1. As illustrated in Figs. 1 to 5, 7 and 8, each of the support members 13 extends from the current collector 2 to the current collector 3 (extends between the current collectors 2 and 3). The support member 13 is provided in a gap S between the electrode assembly 1 and the battery case 4.

Specifically, as illustrated in Figs. 1 and 2 to 5, the support member 13 includes a pair of vertical support portions 25 and a pair of lateral support portions 26. Each of the vertical support portions 25 has a long shape extending in the vertical direction that is substantially perpendicular to the direction P. Each of the lateral support portions 26 is in abutment against both longitudinal ends of the pair of vertical support portions 25 (the lateral support portion 26 connects the ends of the vertical support portions 25 to each other). Therefore, the support member 13 is a frame having a rectangular frame shape as viewed from the longitudinal direction.

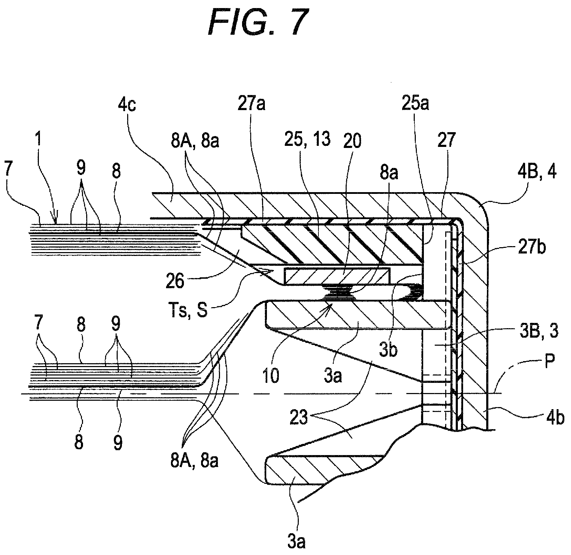

The vertical support portions 25 are disposed in vertical gaps Ts (one example of the gaps S) along the counter electrode plate-shaped portions 2A and 3A (see Fig. 7). The vertical gaps Ts exist between the battery case 4 and the ends 7A and 8A of the electrode sheets 7 and 8.

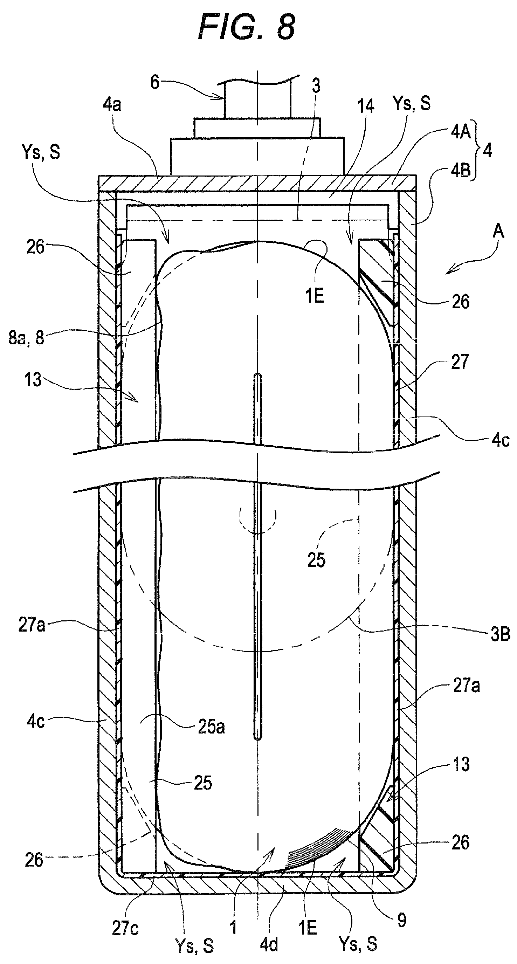

The lateral support portions 26 are disposed in lateral gaps Ys (one example of the gaps S) (see Fig. 8). The lateral gaps Ys exist between the battery case 4 (more specifically, the main case walls 4c) and cylindrical surfaces 1E located at upper and lower portions in the electrode assembly 1.

As illustrated in Figs. 1 and 7, a cross section of the vertical support portion 25 that is perpendicular to the vertical direction has a pentagon shape. That is, this cross section is formed by diagonally cutting angle portions of the vertical support portion 25 that are adjacent to the end 8A of the electrode sheet 8 when this cross section is rectangular in shape that is thin and long in the direction P. The vertical support portion 25 having such a cross section extends in the vertical direction (direction substantially perpendicular to the direction P). The vertical support portion 25 is configured so that it can effortlessly be disposed in the vertical gap Ts having the cross section shape that is wide in the lateral direction and narrow in the longitudinal direction. According to this configuration, the gap Ts can effectively be utilized.

As illustrated in Figs. 1 and 8, a cross section of the lateral support portion 26 that is perpendicular to the direction P also has a pentagon shape. That is, this cross section is formed by diagonally cutting angle portions of the lateral support portion 26 that are adjacent to electrode assembly 1 when this cross section is rectangular in shape that is thin and long in the vertical direction. The lateral support portion 26 having such a cross section extends in the lateral direction (direction P). The lateral support portion 26 is configured so that it can effortlessly be disposed in the gap S whose cross section that is perpendicular to the direction P is substantially triangular in shape. According to this configuration, the gap S can effectively be utilized.

The pair of vertical support portions 25 includes end surfaces 25a. The end surfaces 25a are in abutment against (or in surface-contact with) an inner surface 2b of the plate-shaped opposed portion 2B of the current collector 2 and an inner surface 3b of the plate-shaped opposed portions 3B of the current collector 3. According to this configuration, the pair of vertical support portions 25 restrain the current collectors 2 and 3 such that the current collectors 2 and 3 cannot move or cannot easily move inward (in mutually existing directions). That is, the vertical support portion 25 has a function for supporting the current collectors 2 and 3 with respect to the direction P. According to this configuration, the current collectors 2 and 3 are restrained from moving (swinging, displacing or deforming) inward.

As described above, the electrode assembly 1 and the current collectors 2 and 3 are covered with the insulation cover 27. Therefore, to be precise, the lateral gap Ys in which the lateral support portion 26 is housed exists between the insulation cover 27 and the cylindrical surface 1E of the electrode assembly 1. The vertical gap Ts in which the vertical support portion 25 is housed exists between the insulation cover 27 and the ends 7A and 8A of the electrode sheets 7 and 8. Material of the support member 13 may be synthetic resin such as PP (polypropylene) and PE (polyethylene). Other material may be used for the support member 13 only if the material has insulation properties, a resistance to electrolytic solution and strength for supporting the current collectors 2 and 3.

Next, a reason why the support member 13 is provided, operation and effect obtained by the support member 13 will be described in detail.

As illustrated in Fig. 4, according to the non-aqueous electrolytic secondary battery A, the electrode terminals 5 and 6 are provided on the top panel 4A of the battery case 4. The top panel 4A of the battery case 4 fixes the horizontal upper portions 11 of the current collectors 2 and 3. That is, the top panel 4A supports one ends (horizontal upper portions 11) of the current collectors 2 and 3. The current collectors 2 and 3 support the electrode assembly 1 in the battery case 4 by means of the vertical current collecting portions 12 such that the electrode assembly 1 is suspended.

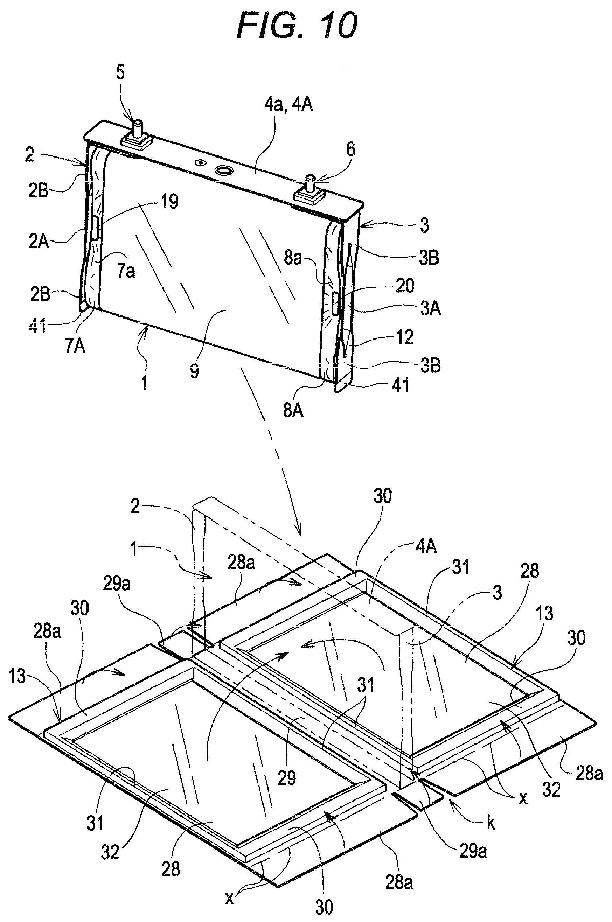

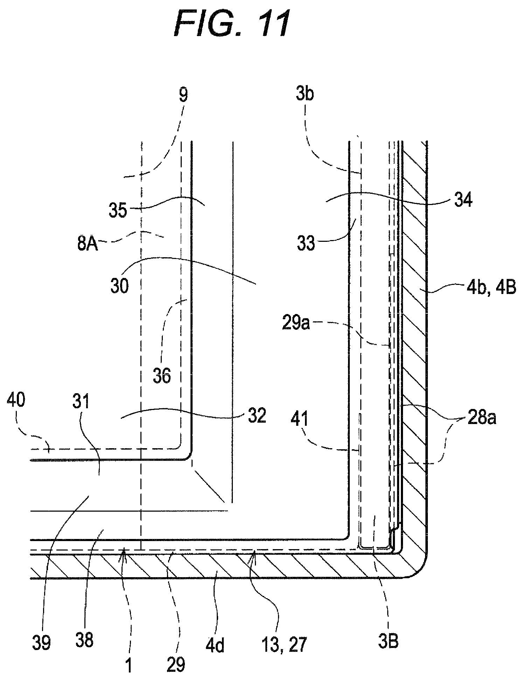

Only upper portions of the current collectors 2 and 3 are supported in some cases as disclosed in JP-A-2010-272324, or the current collectors are supported from both upper and lower directions by connecting lower ends of the current collectors to a ground (bottom surface of the battery case 4) in some cases as will be described later in a second example illustrated in Figs. 10 and 11. In any of the cases, only the upper portions of the pair of current collectors 2 and 3 are supported basically. The vertical current collecting portions 12 of the current collectors 2 and 3 support the electrode assembly 1 such that the electrode assembly 1 is suspended.

Hence, when the secondary battery A receives vibration in the lateral direction (direction P perpendicular to surfaces of the current collectors 2 and 3), the vertical current collecting portions 12 are prone to vibrate in the direction P in the battery case 4 together with the electrode assembly 1. The current collecting-opposed walls 4b of the battery case 4 (or the small side walls 27b of the insulation cover 27) exist outside of the vertical current collecting portions 12 in the direction P. Hence, the vertical current collecting portions 12 do not move in an outward direction in the direction P. However, members that support the vertical current collecting portions 12 do not exist in an inward direction in the direction P. Hence, when the secondary battery A receives the above-described vibration, the vertical current collecting portions 12 (current collectors 2 and 3) are dragged by the electrode assembly 1, and the vertical current collecting portions 12 are prone to be moved (displaced) in the inward direction.

If the displacement and restoration of the vertical current collecting portions 12 are repeated, the end 7A of the electrode sheet 7 and the end 8A of the electrode sheet 8 of the electrode assembly 1 repeatedly receive forces along a direction for buckling the ends 7A and 8A and a direction for pulling them. Hence, the ends 7A and 8A are repeatedly deformed. As a result, there is a possibility that a crack and/or a rupture take place in the electrode sheets 7 and 8 (especially ends 7A and 8A). This is inconvenience when the battery is disposed in a place such as an automobile where vibration takes place frequently. The support member 13 resolves or improves the inconvenience.

The electrode assembly 1 has a rounded rectangular shape as viewed from the direction P (see Fig. 3). Therefore, the electrode assembly 1 is provided at its upper and lower portion with cylindrical surfaces 1E. Hence, if the electrode assembly 1 is housed in the rectangular battery case 4, the laterally extending lateral gaps Ys are created in four locations between the front and rear main case walls 4c and the top panel 4A on one side and the upper cylindrical surface 1E on the other side, and between the front and rear main case walls 4c and the bottom wall 4d on one side and the lower cylindrical surface 1E on the other side. The vertical gaps Ts are created between the front and rear main case walls 4c on one side and the bundled end 7A of the positive electrode sheet 7 that is electrically connected to the counter electrode plate-shaped portion 2A of the current collector 2, and the bundled end 8A of the negative electrode sheet 8 that is electrically connected to the counter electrode plate-shaped portion 3A of the current collector 3 on the other side. In the secondary battery A of the example, the support members 13 are disposed in the lateral gap Ys and the vertical gap Ts. That is, these gaps are effectively utilized. Hence, it is unnecessary to provide an exclusive space in which the support member 13 is disposed.

As described above, according to the non-aqueous electrolytic secondary battery A, the electrode assembly 1 of the spiral structure is housed in the rectangular battery case 4. Hence, the support members 13 have rectangular frame shapes so that the support members 13 can effortlessly be housed in vacant spaces (gaps S) including the vertical gap Ts and the lateral gap Ys. Therefore, it is possible to restrain or resolve the movement (including vibration movement) of the current collectors 2 and 3 in the direction P (toward a surface of the vertical current collecting portion 12) without any alterations of the secondary battery A including change of structure or addition of parts.

By providing the support member 13 in this manner, a structure that supports the current collectors 2 and 3 when the non-aqueous electrolytic secondary battery A receives vibration in the longitudinal direction (especially direction P) is constructed. Hence, the phenomenon that the current collectors 2 and 3 are dragged by the electrode assembly 1 and are moved in the direction P is prevented or restrained. As a result, even under an installation environment in which vibration takes place frequently such as in an automobile, it is possible to restrain the vertical current collecting portions 12 of the current collectors 2 and 3 from swinging. As a result, it is possible to substantially resolve the inconvenience that the end 7A of the electrode sheet 7 and the end 8A of the electrode sheet 8 in the electrode assembly 1 are repeatedly deformed and a crack and/or a rupture takes place in the electrode sheets 7 and 8 (especially the ends 7A and 8A). Therefore, a non-aqueous electrolytic secondary battery A in which durability is improved is realized.

### [Second Example]

In the configuration of the non-aqueous electrolytic secondary battery of the first example, a non-aqueous electrolytic secondary battery A of a second example includes an insulation cover 27 that is integrally formed with support members 13 (see Fig. 9).

As described above, a battery case 4 is made of conductive material such as aluminum alloy. Therefore, to electrically insulate the battery case 4 from an electrode assembly 1 and current collectors 2 and 3 that are housed in the battery case 4, the secondary battery A is provided with the insulation cover 27. The insulation cover 27 is made of insulating material. The insulation cover 27 is inserted into the battery case 4 in a state where the electrode assembly 1 and the current collectors 2 and 3 are housed in the insulation cover 27.

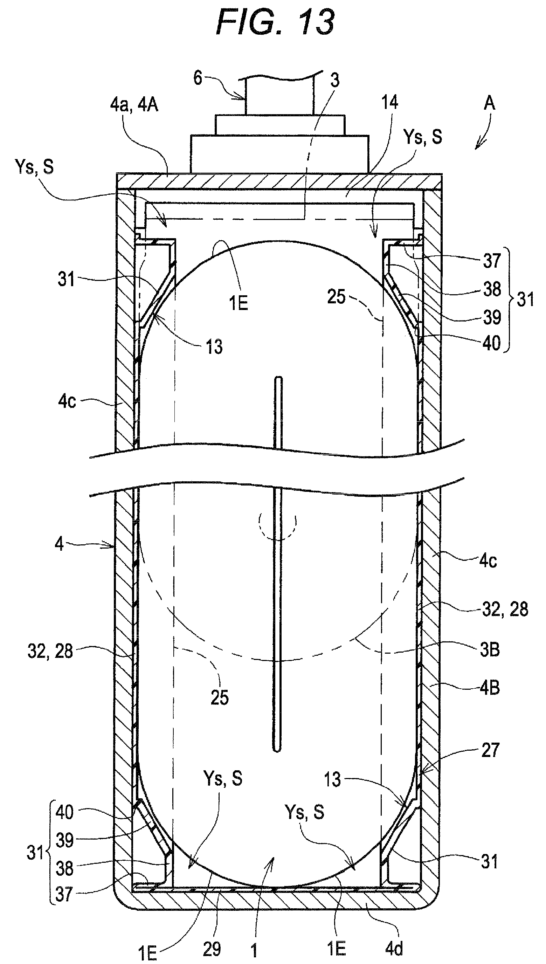

In the secondary battery A of the second example, the insulation cover 27 and the support members 13 are integrally formed together (see Figs. 9 and 13). As illustrated in Figs. 10 and 11, in the secondary battery A of the second example, short side walls 41 as insulation caps are put on lower ends of the current collectors 2 and 3. The current collectors 2 and 3 are extended downward so that lower ends thereof reach a bottom wall (reference numeral thereof is omitted) of the battery case 4.

As illustrated in Figs. 9 and 10, the insulation cover (integral insulation cover, hereinafter) 27 that is integrally provided with the support members 13 has such a structure (knocked-down structure) that essential portions of the integral insulation cover 27 are bent from a substantially plate-shaped developed state so that the integral insulation cover 27 can be assembled into a non-lid shape (rectangular parallelepiped shape) as illustrated in Fig. 1. That is, as illustrated in Fig. 9, the integral insulation cover 27 is formed from thin synthetic resin. The integral insulation cover 27 includes a pair of large side walls 28 each having the support member 13, and a bottom wall 29 located between the large side walls 28. Each of the large side walls 28 includes a pair of superposition walls 28a (total number of superposition walls 28a is four) projecting outward. A pair of projecting pieces 29a projecting outward are provided on both ends of the bottom wall 29.

Each of the large side walls 28 includes a pair of convex vertical frames 30, a pair of convex lateral frames 31, and a flat wall 32. The convex lateral frames 31 connect both ends of the convex vertical frames 30 to each other. The flat wall 32 is a concave portion in the four frame portions. As described above, the large side wall 28 has a plate shape including the concave and convex portions. The pair of convex vertical frames 30 and the pair of convex lateral frames 31 configure a frame having a rectangular frame shape. This frame configures the support member 13. The pair of large side walls 28 and the bottom wall 29 is continuous and integral with each other. Cutouts k are formed between adjacent superposition walls 28a and the projecting pieces 29a so that they can independently be bent. The integral insulation cover 27 will be bent along thin lines x illustrated in Figs. 9 and 10.

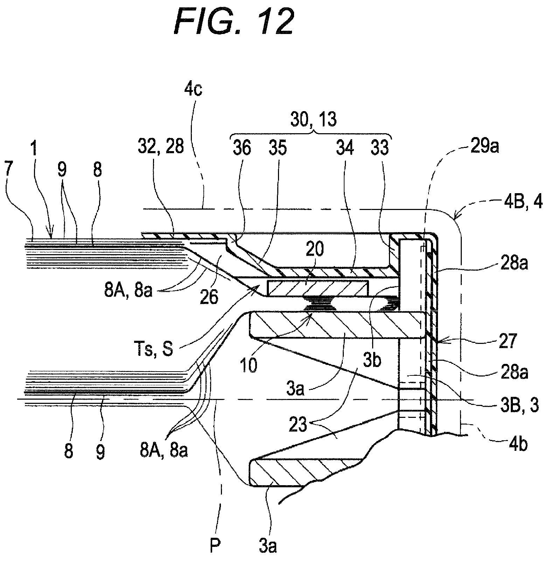

As illustrated in Fig. 12, each of the convex vertical frames 30 includes an outer wall 33, a front vertical wall 34, an inclined vertical wall 35, and a short side vertical wall 36 having an extremely short width. The convex vertical frame 30 is formed such that it is fitted into a vertical gap Ts. As illustrated in Fig. 13, each of the convex lateral frames 31 includes a horizontal wall 37, a front lateral wall 38, an inclined lateral wall 39, and a short lateral wall 40 having an extremely short width. The convex lateral frame 31 is formed such that it is fitted into a lateral gap Ys. Thicknesses of the walls 33 to 40 may be thicker than a thickness (basic thickness) of the flat wall 32. In this case, strength and rigidity of each of the walls 33 to 40 are enhanced. Hence, functions of the convex vertical frames 30 and the convex lateral frames 31 for supporting the current collectors 2 and 3 are enhanced.

Here, a procedure for assembling the developed integral insulation cover 27 (see Fig. 9) into the non-lid shape will be described. First, as illustrated in Fig. 10, the left and right large side walls 28 are bent from the bottom wall 29 as shown by arrows to raise the large side walls 28. Next, the projecting pieces 29a are bent as shown by arrows to raise the projecting pieces 29a. Then, the four superposition walls 28a of both the large side walls 28 are bent as shown by arrows. According to this operation, the integral insulation cover 27 is assembled into the non-lid box shape (see Figs. 12 and 13). As illustrated in Fig. 11, the pair of superposition walls 28a is superposed on outer sides of the projecting pieces 29a. According to this operation, short side walls 41 of the integral insulation cover 27 are formed. These projecting pieces 29a and the pair of superposition walls 28a may be pasted on each other by an adhesive, or they may merely be superposed on each other.

The projecting pieces 29a and the pair of superposition walls 28a configuring the short side walls 41 may be adhered to each other by an adhesive so that they cannot be separated (or cannot easily be separated) from each other. In this case, as shown by phantom lines (two-dot chain line) in Fig. 10, the electrode assembly 1 provided with the current collectors 2 and 3 may previously be placed on the bottom wall 29 before the integral insulation cover 27 is assembled. Then, from this state, the above-described bending steps may be carried out. Its reason will be described below. As illustrated in Figs. 12 and 13, when the integral insulation cover 27 is in its assembled state where it covers the electrode assembly 1, the support members 13 (specifically, upper convex lateral frames 31) enter thickness widths of the electrode assembly 1 (lateral gaps Ys). Therefore, after the integral insulation cover 27 is assembled into the non-lid box shape, it is impossible or difficult to (forcibly) put the electrode assembly 1 provided with the current collectors 2 and 3 into the integral insulation cover 27 through the upper opening from which the pair of convex lateral frames 31 project.

The integral insulation cover 27 is made of flexible insulating material such as plastic (synthetic resin) in some cases. In such a case, the electrode assembly 1 can forcibly be put into the integral insulation cover 27 in some cases depending upon sizes of various parts. Hence, when the integral insulation cover 27 is to be assembled, it should appropriately be judged whether the electrode assembly 1 provided with the current collectors 2 and 3 should previously be placed on the bottom wall 29 in accordance with a structure of the integral insulation cover 27 (whether the short side wall 41 is adhered) and material of the integral insulation cover 27.

When the integral insulation cover 27 is assembled into the non-lid box shape and the electrode assembly 1 provided with the current collectors 2 and 3 is housed in the integral insulation cover 27, the convex vertical frames 30 are fitted into the vertical gaps Ts and the convex lateral frames 31 are fitted into the lateral gaps Ys as illustrated in Figs. 11 to 13. In this state, the outer wall 33 of each of the convex vertical frames 30 in the support member 13 is surface-abutted (or butted) against a corresponding inner surface 2b of a plate-shaped opposed portion 2B of the current collector 2 and against a corresponding inner surface 3b of a plate-shaped opposed portions 3B of the current collector 3. Very slight gaps may exist between the outer wall 33 and the inner surfaces 2b and 3b. In this case also, the above-described effect caused by the support member 13 can be obtained.

The non-aqueous electrolytic secondary battery A of the second example has the same effect as that of the battery of the first example. In the second example, it is possible to mount the support member 13 on the electrode assembly 1 by mounting the integral insulation cover 27 on the electrode assembly 1. According to this configuration, it is possible to enhance the assembling efficiency (productive efficiency). That is, it is possible to reduce the number of parts of the integral insulation cover 27 having the support members 13 as compared with the support members 13 and the integral insulation cover 27 of the first example illustrated in Fig. 1. That is, the one part (integral insulation cover 27) is used instead of the three parts (the pair of support members 13 and the integral insulation cover 27). Therefore, it is possible to reduce the cost, and the number of assembling steps.

For producing the non-aqueous electrolytic secondary battery A of the second example, the integral insulation cover 27 that is integrally formed with the support members 13 is prepared in its developed state. The integral insulation cover 27 is assembled such that the support members 13 are located in the lateral gaps Ys and the vertical gaps Ts between the pair of current collectors 2 and 3. According to this operation, the integral insulation cover 27 is formed into a predetermined bag shape in which the electrode assembly 1 and the pair of current collectors 2 and 3 are housed therein.

Therefore, according to the producing method of the battery A of the second example, the electrode assembly 1 provided with the current collectors 2 and 3 is housed in the integral insulation cover 27 while bending the developed integral insulation cover 27 into the bag shape. According to this operation, the following unique effects can be obtained. That is, even when the projecting pieces 29a and the pair of superposition walls 28a configuring the short side walls 41 of the integral insulation cover 27 are adhered to each other by an adhesive and the integral insulation cover 27 cannot be again developed, the support members 13 can be disposed at predetermined locations while avoiding inconvenience such as a case where the electrode assembly cannot be housed in the integral insulation cover 27. That is, even in such a case, the integral insulation cover 27 can be assembled without inconvenience.

### [Other Examples]

As illustrated in Figs. 10 and 11, lower plate-shaped opposed portions 2B and 3B of the current collectors 2 and 3 may be extended until the opposed portions 2B and 3B reach a bottom surface of the battery case 4. Further, although it is not illustrated in the drawings, the current collectors 2 and 3 may not (substantially) have the lower plate-shaped opposed portions. When the electrode assembly 1 is formed into an elliptic shape as viewed form the direction P, the upper and lower lateral support portions 26 of the support member 13 may be disposed at locations slightly inward in the vertical direction from the upper and lower ends of the vertical support portions 25. The support member 13 may have such a shape that the support member 13 militates against the lower plate-shaped opposed portions 2B and 3B but does not militate against the upper plate-shaped opposed portions 2B and 3B. The support member 13 may have such a shape that the support member 13 militates against the upper plate-shaped opposed portions 2B and 3B but does not militate against the lower plate-shaped opposed portions 2B and 3B.

According to the secondary battery A illustrated in this embodiment, the top panel 4A of the case 4 is disposed on an upper side of the electrode assembly 1. However, other than this configuration, according to the secondary battery A, it is possible to restrain the current collectors from swinging irrespective how the top panel 4A is disposed (even if the top panel 4A is disposed such that it extends in the vertical direction).

In this embodiment, the battery case 4 has a substantially rectangular parallelepiped shape (angular shape; box shape) that is thin in one direction. However, the shape of the battery case 4 is not limited to this, and any shape can be employed only if the electrode assembly 1 and the current collectors 2 and 3 can be housed in the battery case 4.

In this embodiment, the electric storage device is shown as the secondary battery A. However, the electric storage device need not be limited to the secondary battery, and this storage device may be applied to other kinds of electric storage device (e.g., an electrical double layer capacitor).

In the electrode assembly 1, the straight portions 7a and 8a extending in the vertical direction (direction of arrow II) may be selected as the plurality of ends 7A and 8A. As illustrated in Figs. 1 to 5, 7 and 8, as examples of the support members 13, the support members 13 extending between the pair of current collectors 2 and 3 may be provided through the gaps S between the electrode assembly 1 and the battery case 4.

The vertical support portion 25 may be disposed in the vertical gap Ts (one example of the gap S) between the battery case 4 and the ends 7A and 8A of the electrode sheets 7 and 8 along the plate-shaped opposed portions 2B and 3B formed on both the base end sides and tip end sides of the current collectors of the counter electrode plate-shaped portions 2A and 3A (see Fig. 7).

As illustrated in Fig. 7, the vertical support portion 25 may have such a pentagon shaped cross section that angular portions located on an inner side in the lateral direction and the longitudinal direction in a rectangular shape that is long along a spiral axis P are diagonally cut, and the vertical support portion 25 may be disposed in a state where it extends in the vertical direction (one example of a direction perpendicular to the spiral axis P). As illustrated in Fig. 8, the lateral support portion 26 may have such a pentagon shaped cross section that angular portions located on an inner side in the longitudinal direction and the vertical direction in a rectangular shape that is long in the vertical direction are diagonally cut, and the lateral support portion 26 may be disposed in a state where it extends in the lateral direction (a direction extending along the spiral axis P).

Each of the vertical support portions 25 may function as a location where the left and right current collectors 2 and 3 are restricted such that they cannot move (or cannot easily move) in mutually existing directions, i.e., as a location where the vertical support portions 25 act on the plate-shaped opposed portions 2B and 3B in a supporting manner. The end surfaces 25a in the lateral direction of the vertical support portions 25 may have such sizes that the end surfaces 25a come into a surface-contact with or abut against the inner surfaces 2b and 3b of the upper and lower plate-shaped opposed portions 2B and 3B of the current collectors 2 and 3.

The convex vertical frame 30 and the convex lateral frame 31 can be expressed as a convex-in vertical frame 30 and a convex-in lateral frame 31. The convex-in vertical frame 30 may be formed into a state where it is inwardly inserted in the vertical gap Ts in a convex manner. The convex-in lateral frame 31 may be formed into a state where it is inwardly inserted in the lateral gap Ys in a convex manner.

One object of this embodiment is to provide an electric storage device having a resistance to vibration in a state a plurality of electrode sheets and current collector are electrically bonded to each other in a spiral electrode assembly, in which the electric storage device is improved so that it can also be suitably used for a running vehicle.

A first electric storage device of this embodiment includes the spiral electrode assembly 1 formed by winding positive and negative electrode sheets 7 and 8 and an insulative separator 9 provided between the electrode sheets 7 and 8, a pair of positive and negative current collectors 2 and 3 disposed on both sides of the electrode assembly 1 in the spiral axis P of the electrode assembly 1, and angular case 4 in which the electrode assembly 1 and the current collectors 2 and 3 are housed,
the ends 7A and 8A of the plurality of electrode sheets 7 and 8 disposed inside and outside in the radial direction of the electrode assembly 1 and the current collectors 2 and 3 are electrically bonded to each other, and support members 13 extending between the pair of current collectors 2 and 3 are provided through the gaps S between the electrode assembly 1 and the case 4.

According to a second electric storage device of this embodiment, in the first electric storage device,
the current collectors 2 and 3 include counter electrode plate-shaped portions 2A and 3A having surfaces extending in a direction along the spiral axis P, and plate-shaped opposed portions 2B and 3B that have surfaces extending in a direction perpendicular to the spiral axis P, and that are formed on at least one of a base end side and a tip end side of the current collectors of the counter electrode plate-shaped portions 2A and 3A, the electrode assembly 1 is formed into a rounded rectangular shape as viewed from a direction of the spiral axis P,
the ends 7A and 8A of the plurality of electrode sheets disposed inside and outside of a radial direction of the electrode assembly 1 and the counter electrode plate-shaped portions 2A and 3A are electrically bonded to each other, and each of the support members 13 is disposed to extend between the plate-shaped opposed portions 2B and 3B.

According to a third electric storage device of this embodiment, in the second electric storage device,
the support member 13 is formed into a rectangular frame shape including a pair of vertical support portions 25 each having a long shape extending in a direction perpendicular to the spiral axis P, and a pair of lateral support portions 26 that connect, to each other, both ends of the vertical support portions 25 in their longitudinal direction.

According to a fourth electric storage device of this embodiment, in the third electric storage device,
each of the vertical support portions 25 is disposed in a vertical gap Ts formed between the case 4 and the ends 7A and 8A of the electrode sheets in a state where the vertical support portion 25 extends along the plate-shaped opposed portions 2B and 3B formed on both the base end side and the tip end side of the current collector. The each of the lateral support portions 26 is disposed in a lateral gap Ys formed between the case 4 and the cylindrical surface 1E of the electrode assembly 1.

According to a fifth electric storage device of this embodiment, in the fourth electric storage device,
the support members 13 are provided on both sides of the electrode assembly 1 in its thickness direction in a state where the support members 13 can abut against ends of the plate-shaped opposed portions 2B and 3B in their width directions.

According to a sixth electric storage device of this embodiment, in any one of the first to fifth electric storage devices,
the support member 13 is made of synthetic resin.

According to a seventh electric storage device of this embodiment, in any one of first to sixth electric storage devices,
an integral insulation cover 27 made of insulating material in which the electrode assembly 1 and the current collectors 2 and 3 are housed is provided between the case 4 made of conductive material on one side and the electrode assembly 1 and the pair of current collectors 2 and 3 on the other side, and the support members 13 are integrally formed with the integral insulation cover 27.

According to the first electric storage device, the support member is disposed between the pair of current collectors. According to this configuration, a case where the current collectors move in mutually existing directions is restrained or prevented. Since the case where the current collectors move and/or vibrate is restrained or prevented, a case where an end of the electrode sheet bonded to the current collector is repeatedly moved (vibrated) in the spiral axial direction is reduced or resolved. As a result, it is possible to prevent a crack and/or a rupture from taking place in the electrode sheet at an early stage. Therefore, durability and/or reliability of the electric storage device are improved.

Further, the support member that is means for achieving the above-described effect is provided through the gap formed between the spiral electrode assembly and the case. Hence, it is unnecessary to cut a volume of the electrode assembly or an exclusive space in which the support member is disposed need not be provided. That is, it is possible to realize a structure having excellent rationality in which the support member can be disposed while maintaining a capacity (battery capacity) of the electric storage device. As a result, it is possible to provide an electric storage device that includes a structure having a resistance to vibration and that is improved such that the electric storage device can be suitably used also for a running vehicle in a state where the current collectors and the plurality of electrode sheets in the spiral electrode assembly are electrically bonded to each other.

According to the second electric storage device, the counter electrode plate-shaped portion that is bonded to the plurality of electrode sheets in the current collector is a wall surface extending in a direction along the spiral axis. Hence, the counter electrode plate-shaped portion is less prone to associate with supporting action. Hence, if the support member having the supporting action is applied to the plate-shaped opposed portions located on both sides of the counter electrode plate-shaped portion, it is possible to provide an effective electric storage device (e.g., a non-aqueous electrolytic secondary battery) capable of exerting practical and effective vibration-preventing function. That is, the support member is of a structure that abuts against the plate-shaped opposed portion whose surface is opposed the support member. Hence, even if there is a slight dimension error and/or product error, the effect obtained by the first electric storage device can more reliably be exerted.

According to the third electric storage device, the support member is formed into the rectangular frame shape including the pair of vertical support portions and the pair of lateral support portions. Hence, the gap formed between the electrode assembly and the case can effectively be utilized. Further, it is possible to provide an electric storage device including the rational support member having excellent strength and rigidity.

According to the fourth electric storage device, the support member includes the vertical support portions disposed in the vertical gaps between the ends of the electrode sheets and the case, and the lateral support portions disposed in the lateral gaps between the cylindrical surface of the electrode assembly and the case. According to this configuration, it is possible to provide, in a stably supported state, large rectangular frame shaped support members capable of reliably supporting the current collectors by their wide surfaces using the vertical gaps formed lateral to the foil end while efficiently using the gaps without being deviated in position.

In the fifth electric storage device, the support members having the rectangular frame shapes are provided on both sides of the electrode assembly. Hence, the well balanced electric storage device can be configured. Therefore, the effect obtained by the fourth electric storage device can more reliably be obtained.

According to the sixth electric storage device, the support member is made of synthetic resin. According to this configuration, the light-weighted support member can be configured inexpensively. Therefore, it is possible to provide an electric storage device in a desirable state as a product.

In the seventh electric storage device, the insulation cover that is provided for insulating the current collectors and the electrode assembly from the case or vice versa is formed integrally with the support members. By mounting the insulation cover, the support members are also mounted. Hence, the assembling performance is improved. Further, the effect of any one of the first to sixth electric storage devices can be obtained. In addition, it is possible to reduce costs by reducing the number of parts.

The foregoing detailed description of the embodiments has been presented for the purposes of illustration and description. Many modifications and variations are possible in light of the above teaching. It is not intended to be exhaustive or to limit the subject matter described herein to the embodiments disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as embodiments of implementing the claims appended hereto.

## Claims

1. An electric storage device (A) comprising:
an electrode assembly (1) including a positive electrode sheet (7), a negative electrode sheet (8), and a separator (9) for insulating between the positive electrode sheet and the negative electrode sheet;
positive and negative current collectors (2 and 3) disposed on both ends of the electrode assembly (1);
a case (4) in which the electrode assembly (1) and the current collectors (2 and 3) are housed; and
a support member (13) extending from the positive current collector (2) to the negative current collector (3) and being disposed between the positive current collector (2) and the negative current collector (3) for supporting the current collectors (2 and 3) in such a manner that the current collectors (2 and 3) are restrained from being displaced toward the electrode assembly (1).

2. The electric storage device (A) according to claim 1, wherein one end (11) of the positive current collector (2) and one end (11) of the negative current collector (3) are fixed on the case (4).

3. The electric storage device (A) according to claim 2, wherein the support member (13) is disposed between the electrode assembly (1) and the case (4).

4. The electric storage device (A) according to claim 3, wherein the positive and negative current collectors (2 and 3) include plate-shaped opposed portions (2B and 3B), and
the support member (13) abuts against the plate-shaped opposed portions (2B and 3B) of both the current collectors (2 and 3).

5. The electric storage device (A) according to claim 4, the support member (13) comprising:
a pair of vertical support portions (25) that extends along the plate-shaped opposed portions (2B and 3B) of both the current collectors (2 and 3) and abuts against the plate-shaped opposed portions (2B and 3B); and
a lateral support portion (26) that abuts against both the vertical support portions (25).

6. The electric storage device (A) according to claim 5, wherein
the electrode assembly (1) includes a roll body formed by spirally winding the positive electrode sheet (7), the negative electrode sheet (8) and the separator (9),
the current collectors (2 and 3) are disposed on both ends of the roll body in an axial direction thereof, and
the lateral support portion (26) is disposed in a lateral gap (Ys) formed between the case (4) and a curved surface (1E) of the roll body.

7. The electric storage device (A) according to claim 6, wherein
two lateral support portions (26) are provided,
one of the lateral support portions (26) abuts against ends of the pair of vertical support portions (25), and
the other lateral support portion (26) abuts against other ends of the pair of vertical support portion (25).

8. The electric storage device (A) according to claim 7, wherein
the positive electrode sheet (7) includes a first bare portion that is exposed from one end of the roll body, where an end (7A) of the first bare portion is electrically connected to the positive current collector (2),
the negative electrode sheet (8) includes a second bare portion that is exposed from one end of the roll body, where an end (8A) of the second bare portion is electrically connected to the negative current collector (3), and
the vertical support portions (25) are disposed in vertical gaps (Ts) formed between the two bare portions and the case (4).

9. The electric storage device (A) according to claim 8, wherein two support members (13) having the vertical support portions (25) and the lateral support portions (26) are provided on both sides of the roll body.

10. The electric storage device (A) according to any one of claim 1 to 9, wherein the support members (13) contain synthetic resin.

11. The electric storage device (A) according to any one of claim 1 to 9, further comprising an insulation cover (27) disposed between the electrode assembly (1) and the current collectors (2 and 3), and the case (4), and the electrode assembly (1) and the current collectors (2 and 3) being housed in the insulation cover (27), wherein
the support member (13) and the insulation cover (27) are integrally formed together.

12. An insulation cover (27) for an electric storage device (A) according to claim 1, wherein
the insulation cover (27) is disposed between the electrode assembly (1) and the case, the electrode assembly (1) and the current collectors (2 and 3) being housed in the insulation cover (27), and
the insulation cover (27) is integrally formed with a support member (13) extending from the positive current collector (2) to the negative current collector (3) for supporting the current collectors (2 and 3) in such a manner that the current collectors (2 and 3) are restrained from being displaced toward the electrode assembly (1).

## Patentansprüche

1. Elektrische Speichervorrichtung (A), die aufweist:
eine Elektrodenanordnung (1), die ein positives Elektrodenblech (7), ein negatives Elektrodenblech (8) und einen Separator (9) zur Isolation zwischen dem positiven Elektrodenblech und der negativen Elektrodenblech umfasst;
einen positiven und negativen Stromsammler (2 und 3), die an beiden Enden der Elektrodenanordnung (1) angeordnet sind;
ein Gehäuse (4), in dem die Elektrodenanordnung (1) und die Stromsammler (2 und 3) untergebracht sind; und
ein Halteelement (13), das sich vom positiven Stromsammler (2) zum negativen Stromsammler (3) erstreckt und zwischen dem positiven Stromsammler (2) und dem negativen Stromsammler (3) zum Halten der Stromsammler (2 und 3) in einer solchen Weise angeordnet ist, dass die Stromsammler (2 und 3) daran gehindert werden, dass sie zur Elektrodenanordnung (1) verschoben werden.

2. Elektrische Speichervorrichtung (A) nach Anspruch 1, wobei ein Ende (11) des positiven Stromsammlers (2) und ein Ende (11) des negativen Stromsammlers (3) am Gehäuse (4) befestigt sind.

3. Elektrische Speichervorrichtung (A) nach Anspruch 2, wobei das Halteelement (13) zwischen der Elektrodenanordnung (1) und dem Gehäuse (4) angeordnet ist.

4. Elektrische Speichervorrichtung (A) nach Anspruch 3, wobei der positive und der negative Stromsammler (2 und 3) plattenförmige gegenüberliegende Abschnitte (2B und 3B) aufweisen, und
das Halteelement (13) an den plattenförmigen gegenüberliegenden Abschnitten (2B und 3B) beider Stromsammler (2 und 3) anliegt.

5. Elektrische Speichervorrichtung (A) nach Anspruch 4, wobei das Halteelement (13) aufweist:
eine Paar vertikale Halteabschnitte (25), die sich längs der plattenförmigen gegenüberliegenden Abschnitte (2B und 3B) beider Stromsammler (2 und 3) erstrecken und an den plattenförmigen gegenüberliegenden Abschnitten (2B und 3B) anliegen; und
einen lateralen Halteabschnitt (26), der an beide vertikale Halteabschnitte (25) anliegt.

6. Elektrische Speichervorrichtung (A) nach Anspruch 5, wobei
die Elektrodenanordnung (1) einen Rollenkörper aufweist, der durch spiralförmiges Wickeln des positiven Elektrodenblechs (7), des negativen Elektrodenblechs (8) und des Separators (9) gebildet wird,
die Stromsammler (2 und 3) an beiden Enden des Rollenkörpern in dessen axiale Richtung angeordnet sind, und
der laterale Halteabschnitt (26) in einem lateralen Spalt (Ys) angeordnet ist, der zwischen dem Gehäuse (4) und einer gekrümmten Oberfläche (1E) des Rollenkörpers ausgebildet ist.

7. Elektrische Speichervorrichtung (A) nach Anspruch 6, wobei
zwei laterale Halteabschnitte (26) vorgesehen sind,
einer der lateralen Halteabschnitte (26) an Enden des Paars der vertikalen Halteabschnitte (25) anliegt, und
der andere laterale Halteabschnitt (26) an andere Enden des Paars der vertikalen Halteabschnitte (25) anliegt.

8. Elektrische Speichervorrichtung (A) nach Anspruch 7, wobei
das positive Elektrodenblech (7) einen ersten freiliegenden Abschnitt aufweist, der von einem Ende des Rollenkörpers freiliegt, wo ein Ende (7A) des ersten freiliegenden Abschnitts mit dem positiven Stromsammler (2) elektrisch verbunden ist,
das negative Elektrodenblech (8) einen zweiten freiliegenden Abschnitt aufweist, der von einem Ende des Rollenkörpers freiliegt, wo ein Ende (8A) des zweiten freiliegenden Abschnitts mit dem negativen Stromsammler (3) elektrisch verbunden ist, und die vertikalen Halteabschnitte (25) in den vertikalen Spalten (Ts) angeordnet sind, die zwischen den beiden freiliegenden Abschnitten und dem Gehäuse (4) ausgebildet sind.

9. Elektrische Speichervorrichtung (A) nach Anspruch 8, wobei zwei Halteelemente (13), die die vertikalen Halteabschnitte (25) und die lateralen Halteabschnitte (26) aufweisen, auf beiden Seiten des Rollenkörpers vorgesehen sind.

10. Elektrische Speichervorrichtung (A) nach einem der Ansprüche 1 bis 9, wobei die Halteelemente (13) Kunstharz enthalten.

11. Elektrische Speichervorrichtung (A) nach einem der Ansprüche 1 bis 9, die ferner eine Isolationsabdeckung (27) aufweist, die zwischen der Elektrodenanordnung (1) und den Stromsammlern (2 und 3) und dem Gehäuse (4) angeordnet ist, und wobei die Elektrodenanordnung (1) und die Stromsammler (2 und 3) in der Isolationsabdeckung (27) untergebracht sind, wobei
das Halteelement (13) und die Isolationsabdeckung (27) integral miteinander ausgebildet sind.

12. Isolationsabdeckung (27) für eine elektrische Speichervorrichtung (A) nach Anspruch 1, wobei
die Isolationsabdeckung (27) zwischen der Elektrodenanordnung (1) und dem Gehäuse angeordnet ist, wobei die Elektrodenanordnung (1) und die Stromsammler (2 und 3) in der Isolationsabdeckung (27) untergebracht sind, und
die Isolationsabdeckung (27) integral mit einem Halteelement (13) ausgebildet ist, das sich vom positiven Stromsammler (2) zum negativen Stromsammler (3) zum Halten der Stromsammler (2 und 3) in einer solchen Weise erstreckt, dass die Stromsammler (2 und 3) daran gehindert werden, dass sie zur Elektrodenanordnung (1) verschoben werden.

## Revendications

1. Dispositif d'accumulation électrique (A) comprenant :
un unité d'électrode (1) comportant une plaque d'électrode positive (7), une plaque d'électrode négative (8), et un séparateur (9) pour l'isolation entre la plaque d'électrode positive et la plaque d'électrode négative ;
un collecteur de courant positif et un collecteur de courant négatif (2 et 3) disposés aux deux extrémités de l'unité d'électrode (1) ;
un boîtier (4) où sont logés l'unité d'électrode (1) et les collecteurs de courant (2 et 3) ; et
un élément de support (13) s'étendant du collecteur de courant positif (2) au collecteur de courant négatif (3) et disposé entre le collecteur de courant positif (2) et le collecteur de courant négatif (3) pour supporter les collecteurs de courant (2 et 3) de manière à empêcher un déplacement des collecteurs de courant (2 et 3) vers l'unité d'électrode (1).

2. Dispositif d'accumulation électrique (A) selon la revendication 1, où une extrémité (11) du collecteur de courant positif (2) et une extrémité (11) du collecteur de courant négatif (3) sont fixées sur le boîtier (4).

3. Dispositif d'accumulation électrique (A) selon la revendication 2, où l'élément de support (13) est disposé entre l'unité d'électrode (1) et le boîtier (4).

4. Dispositif d'accumulation électrique (A) selon la revendication 3, où le collecteur de courant positif et le collecteur de courant négatif (2 et 3) présentent des parties opposées en forme de plaque (2B et 3B), et où
l'élément de support (13) est en butée contre les parties opposées en forme de plaque (2B et 3B) des deux collecteurs de courant (2 et 3).

5. Dispositif d'accumulation électrique (A) selon la revendication 4, où l'élément de support (13) comprend :
une paire de parties verticales de support (25) s'étendant le long des parties opposées en forme de plaque (2B et 3B) des deux collecteurs de courant (2 et 3) et en butée contre les parties opposées en forme de plaque (2B et 3B) ; et
une partie latérale de support (26) en butée contre les deux parties verticales de support (25).

6. Dispositif d'accumulation électrique (A) selon la revendication 5, où l'unité d'électrode (1) comporte un corps d'enroulement formé par enroulement en spirale de la plaque d'électrode positive (7), de la plaque d'électrode négative (8) et du séparateur (9),
les collecteurs de courant (2 et 3) sont disposés aux deux extrémités du corps d'enroulement dans la direction axiale de celui-ci, et où
la partie latérale de support (26) est disposée dans un interstice latéral (Ys) formé entre le boîtier (4) et une surface incurvée (1E) du corps d'enroulement.

7. Dispositif d'accumulation électrique (A) selon la revendication 6, où deux parties latérales de support (26) sont prévues, une des parties latérales de support (26) étant en butée contre les extrémités de la paire de parties verticales de support (25), et où l'autre partie latérale de support (26) est en butée contre les autres extrémités de la paire de parties verticales de support (25).

8. Dispositif d'accumulation électrique (A) selon la revendication 7, où la plaque d'électrode positive (7) présente une première partie dénudée depuis une extrémité du corps d'enroulement, une extrémité (7A) de ladite première partie dénudée étant reliée électriquement au collecteur de courant positif (2),
la plaque d'électrode négative (8) présente une deuxième partie dénudée depuis une extrémité du corps d'enroulement, une extrémité (8A) de ladite deuxième partie dénudée étant reliée électriquement au collecteur de courant négatif (3), et où les parties verticales de support (25) sont disposées dans des interstices verticaux (Ts) formés entre les deux partie dénudées et le boîtier (4).

9. Dispositif d'accumulation électrique (A) selon la revendication 8, où deux éléments de support (13) présentant les parties verticales de support (25) et les parties latérales de support (26) sont prévus sur les deux côtés du corps d'enroulement.

10. Dispositif d'accumulation électrique (A) selon l'une des revendications 1 à 9, où les éléments de support (13) contiennent une résine synthétique.

11. Dispositif d'accumulation électrique (A) selon l'une des revendications 1 à 9, comprenant en outre un couvercle isolant (27) disposé entre l'unité d'électrode (1) et les collecteurs de courant (2 et 3), et où le boîtier (4), l'unité d'électrode (1) et les collecteurs de courant (2 et 3) sont logés dans le couvercle isolant (27),
l'élément de support (13) et le couvercle isolant (27) étant formés d'un seul tenant.

12. Couvercle isolant (27) pour un dispositif d'accumulation électrique (A) selon la revendication 1, où
ledit couvercle isolant (27) est disposé entre l'unité d'électrode (1) et le boîtier, l'unité d'électrode (1) et les collecteurs de courant (2 et 3) étant logés dans le couvercle isolant (27), et où
le couvercle isolant (27) est formé d'un seul tenant avec un élément de support (13) s'étendant du collecteur de courant positif (2) au collecteur de courant négatif (3) pour supporter les collecteurs de courant (2 et 3) de manière à empêcher un déplacement des collecteurs de courant (2 et 3) vers l'unité d'électrode (1).
